# EUROPEAN PATENT APPLICATION

(11) **EP 4 570 602 A1**
(43) Date of publication of application: **18.06.2025**
(21) Application number: 23217278.3
(22) Date of filing: 15.12.2023
(51) Int. Cl.: B60T 8/1755, B60T 8/88, B60T 17/18

(54) **HANDLING FAILURE OF A BRAKING ARRANGEMENT**

(71) Applicant: VOLVO TRUCK CORPORATION, 405 08 Göteborg (SE)
(72) Inventor: KRISHNAKUMAR, Niveditha, 417 06 Göteborg (SE); PONNUSAMY, Nithyanandan, 641107 Coimbatore (IN)
(74) Representative: Valea AB

(57) **Abstract**

A computer system (700) comprising processing circuitry (702) configured to handle failures associated with a braking arrangement of a vehicle (1) is provided. The processing circuitry (702) is configured to determine failures of the braking arrangement. When the failures are associated with a brake ECU (20), the processing circuitry (702) is configured to send a message to an assisting ECU (50). The message is indicative of a transfer of control of at least part of the braking arrangement. When the failures are associated with brake actuators (40), the processing circuitry (702) is configured to trigger an increase in brake pressure to be provided by operational brake actuators (40). When the failures are associated with a brake pedal (60) or a brake pedal sensor (61), the processing circuitry (702) is configured to obtain motion information of a neighboring vehicle (2) and control the braking arrangement based on said motion information.

## Description

### TECHNICAL FIELD

The disclosure relates generally to managing braking arrangements. In particular aspects, the disclosure relates to handling failure of a braking arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When failures with braking arrangement occur, such as failures in the actuators, Electronic Control Units (ECUs), brake pedals and/or associated sensors, safety of the vehicle and potential passengers or drivers therein may be at risk if not possible to brake the vehicle.

Hence, to solve these issues, the vehicle must be stopped without braking at best possible manner, which puts the vehicle and potential passengers or drivers therein at risk, while also making the vehicle difficult to operate.

Hence, there is a need to more efficiently handle failures in braking arrangements.

### SUMMARY

According to a first aspect of the disclosure, a computer system comprising processing circuitry is provided. The processing circuitry is configured to handle one or more failures associated with a braking arrangement of a vehicle.

The processing circuitry is configured to determine one or more failures of the braking arrangement.

The one or more failures is associated with any one or more out of: a brake Electronic Control Unit (ECU) of the braking arrangement, one or more brake actuators of the braking arrangement, and a brake pedal and/or brake pedal sensor of the braking arrangement.

The processing circuitry is configured to handle the one or more failures by any one or more out of the following:
- When the one or more failures are associated with the brake ECU, send a first message to an assisting ECU. The first message is indicative of a transfer of control of at least part of the braking arrangement, from the brake ECU, to the assisting ECU. The first message triggers the assisting ECU to handle one or more brake operations of the braking arrangement.
- When the one or more failures are associated with the one or more brake actuators, trigger an increase in respective brake pressure to be provided by one or more operational brake actuators of the braking arrangement.
- When the one or more failures are associated with the brake pedal and/or brake pedal sensor, obtain motion information of a neighboring vehicle and control the braking arrangement based on said motion information.

The first aspect of the disclosure may seek to improve safety and control of operating a vehicle experiencing failures in the braking arrangement.

A technical benefit may include improved and safer handling of failures in the braking arrangement and further improved control of handling the vehicle during failures in the braking arrangement. This is since the one or more failures can be handled such that it is possible to brake the vehicle during occurring failures.

Optionally in some examples, including in at least one preferred example, the processing circuitry is further configured to obtain one or more status messages indicative of a status of the braking arrangement. In these examples, the processing circuitry is configured to determine the one or more failures based on the one or more status messages.

A technical benefit may include improved and safer handling of failures in the braking arrangement and further improved control of handling the vehicle during failures in the braking arrangement. This is since one or more failures can be more accurately detected and hence, the failure can be quicker and more accurately handled.

Optionally in some examples, including in at least one preferred example, the when the one or more failures are associated with the brake ECU, the processing circuitry is further configured to obtain a brake request for braking the vehicle, and to send a second message indicative of said brake request to the assisting ECU, for use in handling the one or more brake operations.

A technical benefit may include improved and safer handling of failures in the braking arrangement and further improved control of handling the vehicle during failures in the braking arrangement. This is since the assisting ECU can prepare, manage, and trigger the brake operations on behalf of the failing ECU.

Optionally in some examples, including in at least one preferred example, when the one or more failures are associated with the brake ECU, the processing circuitry is further configured to obtain sensor data associated with a motion of the vehicle and/or of a status of the braking arrangement, and send said sensor data to the assisting ECU for use in handling the one or more brake operations.

A technical benefit may include improved and safer handling of failures in the braking arrangement and further improved control of handling the vehicle during failures in the braking arrangement. This is since assisting ECU can handle the one or more brake operations more accurately based on the sensor data.

Optionally in some examples, including in at least one preferred example, the control transferred to the assisting ECU comprises control of the one or more brake actuators.

A technical benefit may include improved and safer handling of failures in the braking arrangement and further improved control of handling the vehicle during failures in the braking arrangement. This is since the assisting ECU can control when to actuate the one or more brake actuators.

Optionally in some examples, including in at least one preferred example, the assisting ECU is located remotely from the vehicle.

A technical benefit may include improved and safer handling of failures in the braking arrangement and further improved control of handling the vehicle during failures in the braking arrangement. This is since the vehicle can be braked even if there are failures of all local applicable ECUs such as onboard ECUs of the vehicle.

Optionally in some examples, including in at least one preferred example, the assisting ECU is a virtual ECU comprised in one or more remote servers and/or as part of a cloud network service.

A technical benefit may include improved and safer handling of failures in the braking arrangement and further improved control of handling the vehicle during failures in the braking arrangement. This is since the assisting ECU is always available as a virtual resource and thereby, it is possible to always brake the vehicle even if the ECU fails.

Optionally in some examples, including in at least one preferred example, the assisting ECU is an ECU of a neighboring vehicle.

A technical benefit may include improved and Safer handling of failures in the braking arrangement and further improved control of handling the vehicle during failures in the braking arrangement. This is since the assisting ECU may have low latency to the vehicle, and since the assisting ECU may further use information of motion in the neighboring vehicle as part of information of how to brake the vehicle.

Optionally in some examples, including in at least one preferred example, the processing circuitry is further configured to trigger the increase in respective brake pressure to be provided by one or more operational brake actuators of the braking arrangement by redistributing respective brake pressure of the one or more brake actuators associated with the one or more failures to the one or more operational brake actuators.

A technical benefit may include improved and safer handling of failures in the braking arrangement and further improved control of handling the vehicle during failures in the braking arrangement. This is since the same, but redistributed, brake pressure can be achieved, and thereby the same brake force, even when brake actuators fail, thereby achieving a braking close to a fully operational state more easily controllable for a driver, and safer than to disregard the loss in brake pressure of the failing one or more actuators.

According to a second aspect of the disclosure, a vehicle comprising a braking arrangement, and comprising the computer system according to the first aspect is provided.

A technical benefit of the second aspect corresponds to the technical benefit of the first aspect.

According to a third aspect of the disclosure an assisting brake ECU configured to handle one or more failures associated with a brake ECU of a braking arrangement of a vehicle is provided.

The assisting brake ECU is configured to receive a first message. The first message is indicative of a transfer of control of at least part of the braking arrangement, from the brake ECU, to the assisting ECU.

The assisting brake ECU is configured to, in response to receiving the first message, handle one or more brake operations of the braking arrangement.

The third aspect may improve safety and control of operating a vehicle experiencing failures in the braking arrangement.

A technical benefit may include improved and Safer handling of failures in the braking arrangement and further improved control of handling the vehicle during failures in the braking arrangement. This is since the assisting ECU can handle the one or more brake operations instead of the failing brake ECU.

Optionally in some examples, including in at least one preferred example, the assisting brake ECU is further configured to receive a second message indicative of a brake request for braking the vehicle, for use in handling the one or more brake operations. In these examples, the assisting brake ECU is configured to handle the one or more brake operations of the braking arrangement in response to the indicated brake request.

A technical benefit may include improved and Safer handling of failures in the braking arrangement and further improved control of handling the vehicle during failures in the braking arrangement. This is since assisting ECU can handle the one or more brake operations more accurately based on the sensor data.

Optionally in some examples, including in at least one preferred example, the assisting brake ECU is further configured to receive sensor data of the brake ECU. In these examples, the sensor data is associated with a motion of the vehicle and/or of a status of the braking arrangement. In these examples, the assisting brake ECU is configured to handle the one or more brake operations of the braking arrangement based on the received sensor data.

A technical benefit may include improved and safer handling of failures in the braking arrangement and further improved control of handling the vehicle during failures in the braking arrangement. This is since assisting ECU can handle the one or more brake operations more accurately based on the sensor data.

According to a fourth aspect of the disclosure, a computer-implemented method for handling one or more failures associated with a braking arrangement of a vehicle is provided.

The method comprises, by a processing circuitry of a computer system, determining one or more failures of the braking arrangement, the one or more failures being associated with any one or more out of: a brake ECU of the braking arrangement, one or more brake actuators of the braking arrangement, and a brake pedal and/or brake pedal sensor of the braking arrangement.

The method comprises, by the processing circuitry, handling the one or more failures by any one or more out of:
- when the one or more failures are associated with the brake ECU, by the processing circuitry, sending a first message to an assisting ECU, which first message is indicative of a transfer of control of at least part of the braking arrangement, from the brake ECU, to the assisting ECU, and wherein the first message triggers the assisting ECU to handle one or more brake operations of the braking arrangement,
- when the one or more failures are associated with the one or more brake actuators, by the processing circuitry, triggering an increase in respective brake pressure to be provided by one or more operational brake actuators of the braking arrangement,
- when the one or more failures are associated with the brake pedal and/or brake pedal sensor, by the processing circuitry, obtaining motion information of a neighboring vehicle and controlling the braking arrangement based on said motion information.

A technical benefit of the fourth aspect corresponds to the technical benefit of the first aspect.

Optionally in some examples, including in at least one preferred example, the method comprises, by the processing circuitry, obtaining one or more status messages indicative of a status of the braking arrangement. In these examples, determining the one or more failures is based on the one or more status messages.

Optionally in some examples, including in at least one preferred example, the method comprises, when the one or more failures are associated with the brake ECU, by the processing circuitry, obtaining a brake request for braking the vehicle, and sending a second message indicative of said brake request to the assisting ECU, for use in handling the one or more brake operations.

According to a fifth aspect of the disclosure, a computer-implemented method performed by an assisting ECU for handling one or more failures associated with a brake ECU of a braking arrangement of a vehicle is provided.

The method comprises receiving a first message. The first message is indicative of a transfer of control of at least part of the braking arrangement, from the brake ECU, to the assisting ECU.

The method comprises, in response to receiving the first message, handling one or more brake operations of the braking arrangement.

The technical benefit of the fifth aspect corresponds to the technical benefit of the third aspect.

Optionally in some examples, including in at least one preferred example, the method comprises, receiving a second message indicative of a brake request for braking the vehicle, for use in handling the one or more brake operations, and
- handling the one or more brake operations of the braking arrangement in response to the indicated brake request.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle and computer system according to an example.
**FIG. 2** is an exemplary flowchart of a method according to an example.
**FIG. 3** is an exemplary flowchart of a method according to an example.
**FIG. 4** is an exemplary scenario according to an example.
**FIG. 5** is an exemplary flowchart of a method according to an example.
**FIG. 6** is another view of **FIG. 1****,** according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

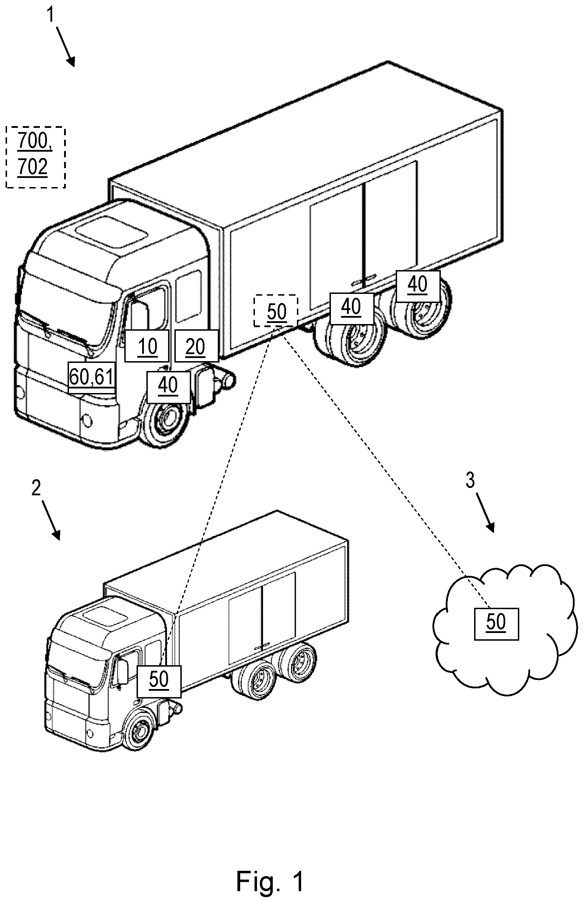

**FIG. 1** illustrates a **vehicle 1** according to some examples herein.

The vehicle 1 may be any suitable vehicle, e.g., a bus, a car, a heavy duty vehicle, e.g., a truck, a combination vehicle, etc.

The vehicle 1 may be manually driven or at least partly autonomous.

The vehicle 1 comprises a braking arrangement comprising **one or more brake actuators 40** for braking the vehicle 1, e.g., actuators for any suitable service brakes.

The braking arrangement may further comprise a **brake ECU 20.**

The brake ECU 20 may be configured to control actuation of the brake actuators 40.

The braking arrangement may comprise a **brake pedal 60** for issuing a brake request to braking arrangement, i.e., to mechanically control the brake actuators 40 and/or to send a brake request to the brake ECU 20.

The brake pedal 60 may be coupled with a **brake pedal sensor 61,** configured to measure a position of the brake pedal 60, and may be arranged to feed brake pedal sensor data to the brake ECU 20, e.g., to indicate a brake request to the brake ECU 20.

The brake ECU 20 may be configured to use the brake pedal sensor data to determine when, and by how much to actuate each respective actuator out of the one or more brake actuators 40, and subsequently send actuation signals to trigger respective braking using these actuators.

In examples herein, the braking arrangement may experience failures with any of the braking arrangement components, such as a failure of the brake ECU 20. In these situations, an **assisting ECU 50** may be configured to take responsibility of the functionalities performed by the brake ECU 20, which are not possible due to the failure. For example, the assisting ECU 50 may be configured to perform any determinations and/or calculations of the brake ECU 20, and/or to trigger actuation of the brake actuators 40.

Sensor data e.g., brake pedal sensor data, which may be needed to perform some determinations and/or calculations for braking the vehicle 1 may be transmitted to the assisting ECU 50, when failure is detected in the brake ECU 20, or redundantly at any time. The sensor data may be transmitted from any suitable entity of the vehicle 1, e.g., any ECU. In some examples, the sensor data may be transmitted from the brake ECU 20 even if the brake ECU 20 is failing. This is since the failure may not be related to the sensor data management or communication capabilities of the ECU 20.

The assisting ECU 50 may be located in a **neighboring vehicle 2,** at a remote location 3 such as in a server or in a cloud service. The assisting ECU 50 may also be a redundant ECU comprises in the vehicle 1. Alternatively, the assisting ECU 50 may be an ECU comprised in the vehicle 1 primarily configured for another purpose.

The neighboring vehicle 2 and the vehicle 1 may be part of a truck platoon such that they may be configured to follow a leader vehicle of the platoon, e.g., the neighboring vehicle 2.

Besides being able to comprise the assisting ECU 50, the neighboring vehicle 2 may additionally or alternatively be used to provide motion information to the vehicle 1, and/or to the brake ECU 20, when the brake pedal 60 and/or the brake pedal sensor 61 have at least partly failed. The vehicle 1 may then be brakes using the motion information to mimic braking operations and/or the motion of the neighboring vehicle 2, e.g., as indicated by the motion information. In these examples, the neighboring vehicle 2 may travel ahead of the vehicle 1, in a driving direction of the vehicle 1, e.g., similar to, or the same as an Adaptive Cruise Control (ACC) function.

For any examples herein, any suitable sensors and/or ECU's may be configured with a wireless module for performing any of the communications and/or control mechanisms herein.

Examples herein may be performed by a **computer system 700** and/or by a **processing circuitry 702** therein.

The computer system 700 and/or the processing circuitry 702 therein may be a processor and/or an Electronic Control Unit (ECU), e.g., the brake ECU 20, or the assisting ECU 50, or coupled with any or both of them.

The computer system 700 and/or the processing circuitry 702 therein may be one or more remote units e.g., as part of a cloud service in a server, or comprised in the first vehicle 1, or comprised in the neighboring vehicle 2, or located in the remote location 3.

The computer system 700 and/or the processing circuitry 702 therein may be communicatively coupled with, and/or able to control, any suitable unit and/or entity of the vehicle 1 and/or the neighboring vehicle 2, e.g., sensors, brake actuators 40, ECUs, etc.

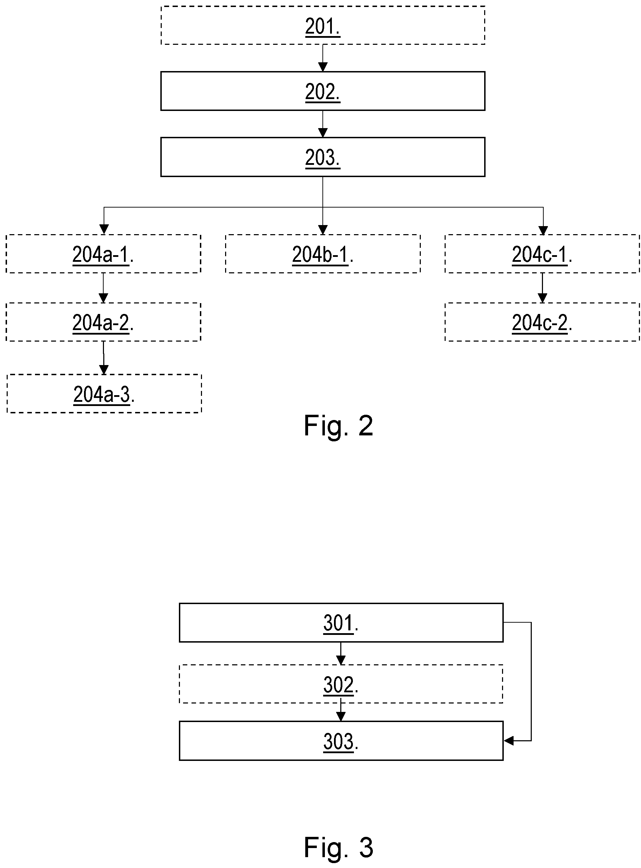

**FIG. 2** is an exemplary flowchart of a method for handling one or more failures associated with the braking arrangement of the vehicle 1.

The method may comprise communication with the assisting ECU 50 according to some examples. In some of these examples, the assisting ECU 50 is any one or more out of: located remote from the vehicle 1, the assisting ECU 50 being a virtual ECU comprised in one or more remote servers and/or as part of a cloud network service, the assisting ECU 50 being an ECU of a neighboring vehicle 2, or the assisting ECU 50 being a redundant ECU in the vehicle 1.

The method comprises some of the following actions which may be taken in any suitable order. Dashed boxes in FIG. 2 may indicate optional actions. Examples herein may be performed by the computer system 700, and in particular the processing circuitry 702. The processing circuitry 702 may or may not be part of the brake ECU 20.

### Action 201

In some examples, the method may comprise obtaining one or more status messages indicative of a status of the braking arrangement.

The one or more status messages may be indicative of any one or more of:
- sensor data of sensors in the vehicle 1, in particular sensor data of the braking arrangement,
- explicit indication of failures, e.g., the brake ECU 20 and/or other circuits and/or sensors may detect errors and may signal the respective failure as part of the one or more status messages,
- periodic messages, and/or
- any other status message that may indicate explicitly or implicitly that there is a failure in the braking arrangement such as in any of the brake ECU 20, the one or more brake actuators 40, the brake pedal 60 and/or the brake pedal sensor 61.

The sensor data as status messages may comprise sensor data of the brake pedal sensor 61, or related to the brake ECU 20 and/or the one or more brake actuators 40, and when there is an anomaly in the sensor data, e.g., spikes or no sensor data, a failure may be indicated.

The explicit indication of a failure as a status message may comprise a signal transmitted from an ECU such as the brake ECU 20 or other suitable ECU, that there is a failure with the brake ECU 20, e.g., it cannot perform its functions properly, and/or a failure with the one or more brake actuators 40, e.g., not responsive, and/or a failure with the brake pedal 60 and/or brake pedal sensor 61, e.g., not responsive and/or no or faulty sensor data.

The periodic messages may be any status updates for each of the brake ECU 20, the one or more brake actuators 40, the brake pedal 60 and/or the brake pedal sensor 61 which may indicate an operational status of the braking arrangement, and e.g., if not detected or received, a failure may be assumed with a corresponding entity of the braking arrangement.

### Action 202

The method comprises determining one or more failures of the braking arrangement.

The one or more failures are associated with any one or more out of:
- the brake ECU 20 of the braking arrangement,
- the one or more brake actuators 40 of the braking arrangement, and
- the brake pedal 60 and/or the brake pedal sensor 61 of the braking arrangement.

In other words, determining the one or more failures may comprise determining that the one or more failures are associated with the brake ECU 20 of the braking arrangement, the one or more brake actuators 40 of the braking arrangement, and/or the brake pedal 60 and/or the brake pedal sensor 61 of the braking arrangement.

The failures may be determined in any suitable manner, e.g., as indicated by warning systems of the vehicle 1, as indicated explicitly or implicitly by the components themselves and/or by manual input.

The failures may relate to that the components may not fully be able to perform their intended behavior. For example, a failure of the brake ECU 20 may just mean that it cannot calculate or actuate the brake pressure, but it may be able to obtain sensor data and may be able to communicate with the assisting ECU 50.

In some examples, determining the one or more failures is based on the one or more status messages as in action 201, e.g., by detecting explicit indications of failures or by detecting failures implicitly due to anomalies in the one or more status messages, e.g., no sensor data or no sensor data changes, not receiving expected periodic messages, etc.

Additionally or alternatively the one or more failures may be determined based on a camera directed towards the brake pedal 60, such that it can be detected if the brake pedal 60 is pressed or not and compare with if a brake request is transmitted or not.

### Action 203

The method comprises handling the one or more failures as determined in actions 202.

The method comprises handling the one or more failures according to which one or more components in the braking arrangement has failed, e.g., as determined in actions 202, e.g., by any or more of the actions below, in any suitable order and/or combination.

In other words, different failures may be handled concurrently by the actions below and/or in as a combined effort if multiple failures appear concurrently.

### Brake ECU 20 failure.

When there are one or more failures associated with the Brake ECU 20, the method may comprise any one or more suitable actions out of the following actions 204a-1, 204a-2, and 204-a3.

### Action 204a-1

In some examples, the method may comprise, sending a first message to the assisting ECU 50, e.g., remote in remote location 3, in the neighboring vehicle 2, or local ECU in the vehicle 1.

The first message may be sent when the one or more failures are associated with the brake ECU 20.

In other words, determining that the one or more failures are associated with the brake ECU 20 may trigger sending the first message.

Furthermore, the first message may trigger the assisting ECU 50 to handle one or more brake operations of the braking arrangement. The one or more brake operations may be predefined and/or indicated by the first message.

The first message may be indicative of a transfer of control of at least part of the braking arrangement, from the brake ECU 20, to the assisting ECU 50, i.e., the control of the one or more brake operations.

In some examples, the control transferred to the assisting ECU 50 comprises control of the one or more brake actuators 40.

In some examples the transferred control, i.e., the one or more brake operations, may relate to any suitable brake ECU activities or brake operations for the braking arrangement of the vehicle 1, e.g., control of the brake actuators 40 as stated above, determination or calculation of when and/or how much brake pressure to apply to brakes of the braking arrangement, processing and/or reacting to sensor data, e.g., from the brake pedal sensor 61.

### Action 204a-2

In some examples, the method may comprise, when the one or more failures are associated with the brake ECU 20, obtaining a brake request for braking the vehicle 1, e.g., by indication from the brake pedal 60 and/or the brake pedal sensor 61.

The brake request may alternatively or additionally be obtained by any other suitable means, e.g., by receiving motion information of the neighboring vehicle 2, e.g., as in action 204c-1 and/or by measuring the neighboring vehicle 2, and wherein obtaining the brake request may comprise detecting from the motion information when to initiate the brake actuators 40, e.g., to match the motion information such as when operating under ACC and/or matching operations of the neighboring vehicle 2.

The brake request may be used to indicate to the assisting ECU 50 to perform the one or more brake operations.

### Action 204a-3

In some examples, the method may comprise, sending a second message to the assisting ECU 50. The second message may be indicative of said brake request of action 204a-2.

The brake request as indicated by the second message may be for use in handling the one or more brake operations, e.g., it may be indicative of how much a driver wants to brake.
The second message may be sensor data forwarded by the processing circuitry to the assisting ECU 50, e.g., by using a wired transmitter, when local to the vehicle 1, i.e., comprised in the vehicle 1, or use a wireless transmitter, when remote to the vehicle 1. However, wireless communication may apply to when the assisting ECU 50 is local to the vehicle 1.

### Brake actuator(s) 40 failure.

When there are one or more failures associated with the one or more brake actuators 40, the method may comprise the following action 204b-1 and/or action 204b-2.

### Action 204b-1

In some examples, the method may comprise, triggering an increase in respective brake pressure to be provided by one or more operational brake actuators 40 of the braking arrangement.

In other words, the one or more operational brake actuators 40 may compensate for lost or reduced brake pressure in the one or more brake actuators that are determined to have failures.

The increase in respective brake pressure may correspond to a brake pressure loss of the failing one or more brake actuators 40.

### Action 204b-2

In some examples, the increase in respective brake pressure to be provided by the one or more operational brake actuators 40 of the braking arrangement may trigger a redistribution of brake pressure. In other words, the method may comprise, redistributing respective brake pressure of the one or more brake actuators 40 associated with the one or more failures to the one or more operational brake actuators 40.

The redistribution of brake pressure may be performed such that a total brake force provided by the braking arrangement is within an error margin or predefined interval of a total brake force provided before the failure.

### Brake pedal 60 and/or brake pedal sensor 61 failure.

When there are one or more failures associated with the brake pedal 60 and/or the brake pedal sensor 61, the method may comprise any one or more suitable actions out of the following actions 204c-1, and 204c-2.

### Action 204c-1

In some examples, the method may comprise, when the one or more failures are associated with the brake pedal 60 and/or brake pedal sensor 61, obtaining motion information of the neighboring vehicle 2.

The motion information may be indicative of how the neighboring vehicle 2 moves, e.g., their brake information, such as brake requests, sensor data, etc.

### Action 204c-2

In some examples, the method may comprise, controlling the braking arrangement based on said motion information, e.g., as in action 204c-1.

For example, when the motion information of the neighboring vehicle 2 indicates that the neighboring vehicle 2 is braking, the vehicle 1 may brake using the one or more brake actuators 40 in a same or corresponding manner, e.g., immediately or at the location where the neighboring vehicle 2 performed its brake operation.

The vehicle 1 may further match a motion of the neighboring vehicle 2, e.g., speed, steering etc. such as based on the motion information and/or based on other sensor information, such as using cameras to track the neighboring vehicle 2.

**FIG. 3** is an exemplary flowchart of a method performed by the assisting ECU 50, e.g., using the computer system 700 and/or the processing circuitry 702 therein and/or using a separate processing circuitry, for handling one or more failures associated with the brake ECU 20 of a braking arrangement of the vehicle 1.

The method comprises the following actions 301-303 in any suitable combination. Any corresponding parameter and/or feature of actions according to the method discussed when referring to FIG. 2 applies to the actions 301-303, in particular with respect to actions 204a-1, 204-a2, and/or 204-a3. Dashed boxes in FIG. 3 may indicate optional actions.

### Action 301

In some examples, the method comprises, receiving a first message, e.g., as transmitted in action 204a-1.

The first message is indicative of a transfer of control of at least part of the braking arrangement, from the brake ECU 20, to the assisting ECU 50, e.g., as discussed in action 204a-1.

### Action 302

In some examples, the method may comprise receiving a second message, e.g., as in action 204a-3. The second message may be indicative of a brake request for braking the vehicle 1, for use in handling the one or more brake operations.

### Action 303

In some examples, the method comprises, in response to receiving the first message, handling one or more brake operations of the braking arrangement.

In some examples, handling the one or more brake operations of the braking arrangement may be performed in response to the indicated brake request, e.g., as in action 302.

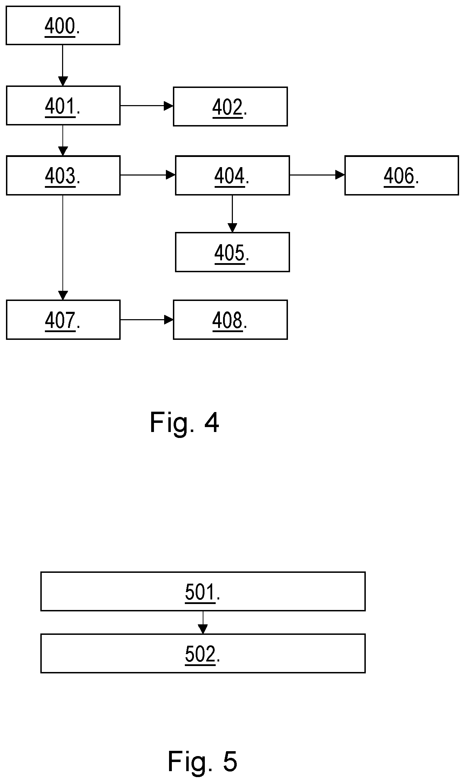

**FIG. 4** is an exemplary flowchart of an example scenario.

**Detect 400** that the vehicle 1 braking arrangement has failed, and **check 401** if the brake ECU 20 has failed, **check 403** if the one or more brake actuators 40 has failed, and/or **check 407** if the brake pedal sensor 61 has failed.

### Case 402 - Brake ECU 20 failure

The failure may be at least partly solved by any one or more out of the following:
- Option 1: Use a main ECU, e.g., the assisting ECU 50, of the vehicle 1 to control the one or more brake actuators 40, e.g., the main ECU of the vehicle 1 may additionally be configured to control vehicle speed/acceleration and/or steering inputs to perform a safe controlled stop,
- Option 2: Share sensors data from sensors of the vehicle 1, e.g., the brake pedal sensor 51, to a vehicle nearby, e.g., the neighboring vehicle 2, and use its brake ECU, e.g., the assisting ECU 50, to control the one or more brake actuators 40,
- Option 3: Integrate a cloud ECU, e.g., the assisting ECU 50, for decision making such that signals from the vehicle 1, e.g., sensor data and/or brake requests, may be sent to a cloud service, e.g., in a remote server, and the decision to actuate the one or more brake actuators 40 may be triggered from the cloud service.

### Case 403 - Brake actuator 40 failure

**Check 404** whether all the one or more brake actuators 40 have failed.

If all the one or more brake actuators 40, e.g., connected with brake calipers of the vehicle 1 is **detected 405** to fail, initiate a use of an engine braking feature for braking the vehicle 1, e.g., whenever the user presses the brake and if all the one or more brake actuators 40 connected with a brake caliper fails.

If one of the one or more brake actuators 40 is **detected 406** to fail, indicate to the brake ECU 20 and/or the assisting ECU 50, to adjust brake pressures between the remaining operating actuators.

### Case 407 - Brake pedal sensor 61 failure

**Collect 408** motion information of the neighboring vehicle 2, e.g., the acceleration data, speed, steering input, and braking input of the neighboring vehicle 2, and mimic the motion information, in particular the braking input, for the vehicle 1.

As an alternative, it may further be possible to reconfigure the braking arrangement to a one foot configuration, and indicate said reconfiguration to the driver of the vehicle 1. The one foot configuration may comprise that, whenever the driver lifts the foot from the accelerator pedal, the one or more brake actuators 40 will be applied.

**FIG. 5** is an example flow chart of a method for handling one or more failures associated with the braking arrangement of the vehicle 1 according to an example.

### Action 501

The method comprises, by a processing circuitry 702 of a computer system 700, determining one or more failures of the braking arrangement, the one or more failures being associated with any one or more out of: the brake ECU 20 of the braking arrangement, the one or more brake actuators 40 of the braking arrangement, and the brake pedal 60 and/or the brake pedal sensor 61 of the braking arrangement.

### Action 502

The method comprises, by the processing circuitry 702, handling the one or more failures by any one or more out of:
- When the one or more failures are associated with the brake ECU 20, by the processing circuitry 702, sending a first message to the assisting ECU 50. The first message is indicative of a transfer of control of at least part of the braking arrangement, from the brake ECU 20, to the assisting ECU 50. The first message triggers the assisting ECU 50 to handle one or more brake operations of the braking arrangement.
- When the one or more failures are associated with the one or more brake actuators 40, by the processing circuitry 702, triggering an increase in respective brake pressure to be provided by one or more operational brake actuators 40 of the braking arrangement.
- When the one or more failures are associated with the brake pedal 60 and/or brake pedal sensor 61, by the processing circuitry 702, obtaining motion information of the neighboring vehicle 2 and controlling the braking arrangement based on said motion information.

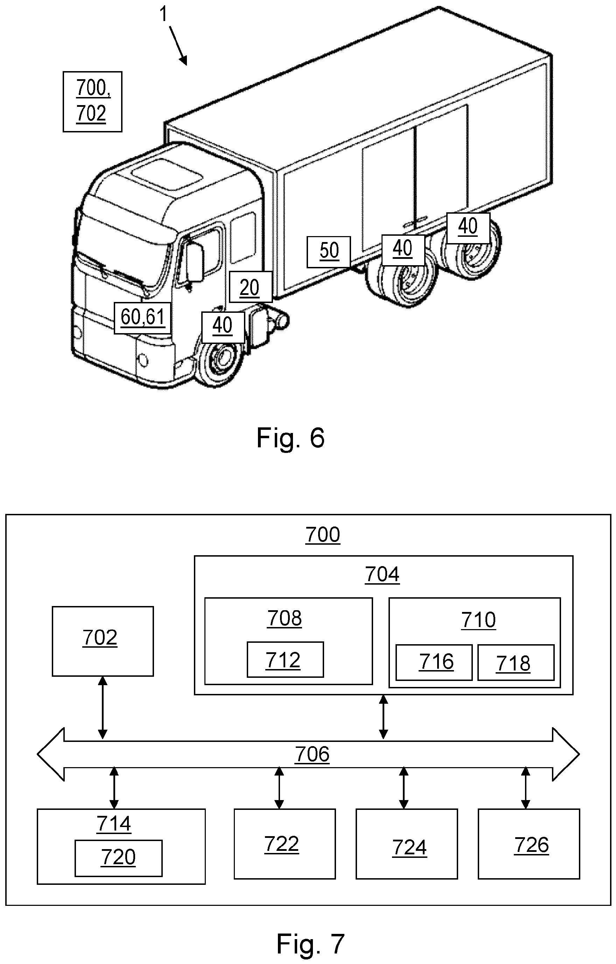

**FIG. 6** is another view of **FIG. 1****,** according to an example. The example is combinable with any one or more actions above. The computer system 700 comprises the processing circuitry 702. The processing circuitry 702 is configured to handle one or more failures associated with a braking arrangement of a vehicle 1.

The processing circuitry 702 is configured to determine one or more failures of the braking arrangement. The one or more failures being associated with any one or more out of: the brake ECU 20 of the braking arrangement, the one or more brake actuators 40 of the braking arrangement, and the brake pedal 60 and/or the brake pedal sensor 61 of the braking arrangement.

The processing circuitry 702 is configured to handle the one or more failures by any one or more out of:
- When the one or more failures are associated with the brake ECU 20, send a first message to the assisting ECU 50. The first message is indicative of a transfer of control of at least part of the braking arrangement, from the brake ECU 20, to the assisting ECU 50. The first message triggers the assisting ECU 50 to handle one or more brake operations of the braking arrangement.
- When the one or more failures are associated with the one or more brake actuators 40, trigger an increase in respective brake pressure to be provided by one or more operational brake actuators 40 of the braking arrangement.
- When the one or more failures are associated with the brake pedal 60 and/or brake pedal sensor 61, obtain motion information of the neighboring vehicle 2 and control the braking arrangement based on said motion information.

**FIG. 7** is a schematic diagram of the computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include the processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **612** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714 and** other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired. The computer system 700 as described in the examples above may be a single system for the vehicle 1 and the neighboring vehicle 2, i.e., for the brake ECU 20 and the assisting ECU 50. Alternatively, the assisting ECU may be managed by a separate corresponding computer system to the computer system 700.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Examples above may be combined with the following Examples in any suitable manner.

Example 1. A computer system 700 comprising processing circuitry 702 configured to handle one or more failures associated with a braking arrangement of a vehicle 1, the processing circuitry 702 is configured to:
- determine one or more failures of the braking arrangement, the one or more failures being associated with any one or more out of: a brake Electronic Control Unit, ECU, 20 of the braking arrangement, one or more brake actuators 40 of the braking arrangement, and a brake pedal and/or brake pedal sensor of the braking arrangement; and
- handle the one or more failures by any one or more out of:
- when the one or more failures are associated with the brake ECU 20, to send a first message to an assisting ECU 50, which first message is indicative of a transfer of control of at least part of the braking arrangement, from the brake ECU 20, to the assisting ECU 50, and wherein the first message triggers the assisting ECU 50 to handle one or more brake operations of the braking arrangement,
- when the one or more failures are associated with the one or more brake actuators 40, trigger an increase in respective brake pressure to be provided by one or more operational brake actuators 40 of the braking arrangement,
- when the one or more failures are associated with the brake pedal 60 and/or brake pedal sensor 61, obtain motion information of a neighboring vehicle 2 and control the braking arrangement based on said motion information.

Example 2. The computer system 700 of Example 1, wherein the processing circuitry 702 is further configured to obtain one or more status messages indicative of a status of the braking arrangement, and wherein the processing circuitry 702 is configured to determine the one or more failures based on the one or more status messages.

Example 3. The computer system 700 of any of Examples 1-2, when the one or more failures are associated with the brake ECU 20, the processing circuitry 702 is further configured to obtain a brake request for braking the vehicle 1, and to send a second message indicative of said brake request to the assisting ECU 50, for use in handling the one or more brake operations.

Example 4. The computer system 700 of any of Examples 1-3, when the one or more failures are associated with the brake ECU 20, the processing circuitry 702 is further configured to obtain sensor data associated with a motion of the vehicle 1 and/or of a status of the braking arrangement, and send said sensor data to the assisting ECU 50 for use in handling the one or more brake operations.

Example 5. The computer system 700 of any of Examples 1-4, wherein the control transferred to the assisting ECU 50 comprises control of the one or more brake actuators 40.

Example 6. The computer system 700 of any of Examples 1-5, wherein the assisting ECU 50 is located remote from the vehicle 1.

Example 7. The computer system 700 of Example 6, wherein the assisting ECU 50 is a virtual ECU comprised in one or more remote servers and/or as part of a cloud network service.

Example 8. The computer system 700 of Example 6, wherein the assisting ECU 50 is an ECU of a neighboring vehicle 2.

Example 9. The computer system 700 of any of Examples 1-8, wherein the processing circuitry 702 is further configured to trigger the increase in respective brake pressure to be provided by one or more operational brake actuators 40 of the braking arrangement by redistributing respective brake pressure of the one or more brake actuators 40 associated with the one or more failures to the one or more operational brake actuators 40.

Example 10. A vehicle 1 comprising a braking arrangement, and comprising the computer system 700 of any of Examples 1-9.

Example 11. An assisting brake Electronic Control Unit, ECU, 50 configured to handle one or more failures associated with a brake ECU 20 of a braking arrangement of a vehicle 1, the assisting brake ECU 20 being configured to:
- receive a first message, which first message is indicative of a transfer of control of at least part of the braking arrangement, from the brake ECU 20, to the assisting ECU 50,
- in response to receiving the first message, handle one or more brake operations of the braking arrangement.

Example 12. The assisting brake ECU 20 of Example 11, wherein the assisting brake ECU 20 is further configured to receive a second message indicative of a brake request for braking the vehicle 1, for use in handling the one or more brake operations, and wherein the assisting brake ECU 20 is configured to handle the one or more brake operations of the braking arrangement in response to the indicated brake request.

Example 13. The assisting brake ECU 20 of any of Examples 11-12, wherein the assisting brake ECU 20 is further configured to receive sensor data of the brake ECU 20, which sensor data is associated with a motion of the vehicle 1 and/or of a status of the braking arrangement, and wherein the assisting brake ECU 20 is configured to handle the one or more brake operations of the braking arrangement based on the received sensor data.

Example 14. A computer-implemented method for handling one or more failures associated with a braking arrangement of a vehicle 1, the method comprising:
- by a processing circuitry 702 of a computer system 700, determining 202, 501 one or more failures of the braking arrangement, the one or more failures being associated with any one or more out of: a brake Electronic Control Unit, ECU, 20 of the braking arrangement, one or more brake actuators 40 of the braking arrangement, and a brake pedal 60 and/or brake pedal sensor 61 of the braking arrangement; and
- by the processing circuitry 702, handling 203, 502 the one or more failures by any one or more out of:
- when the one or more failures are associated with the brake ECU 20, by the processing circuitry 702, sending 204a-1 a first message to an assisting ECU 50, which first message is indicative of a transfer of control of at least part of the braking arrangement, from the brake ECU 20, to the assisting ECU 50, and wherein the first message triggers the assisting ECU 50 to handle one or more brake operations of the braking arrangement,
- when the one or more failures are associated with the one or more brake actuators 40, by the processing circuitry 702, triggering 204b-1 an increase in respective brake pressure to be provided by one or more operational brake actuators 40 of the braking arrangement,
- when the one or more failures are associated with the brake pedal 60 and/or brake pedal sensor 61, by the processing circuitry 702, obtaining 204c-1 motion information of a neighboring vehicle 2 and controlling 204c-2 the braking arrangement based on said motion information.

Example 15. The method of Example 14, further comprising:
- - by the processing circuitry 702, obtaining 201 one or more status messages indicative of a status of the braking arrangement, and wherein determining 202 the one or more failures is based on the one or more status messages.

Example 16. The method of any of Examples 14-15, further comprising: when the one or more failures are associated with the brake ECU 20, by the processing circuitry 702, obtaining 204a-2 a brake request for braking the vehicle 1, and sending 204a-3 a second message indicative of said brake request to the assisting ECU 50, for use in handling the one or more brake operations.

Example 17. A computer-implemented method performed by an assisting Electronic Control Unit, ECU, 50 for handling one or more failures associated with a brake ECU 20 of a braking arrangement of a vehicle 1, the method comprising:
- receiving 301 a first message, which first message is indicative of a transfer of control of at least part of the braking arrangement, from the brake ECU 20, to the assisting ECU 50,
- in response to receiving the first message, handling 303 one or more brake operations of the braking arrangement.

Example 18. A computer-implemented method according to Example 17, further comprising:
- receiving 302 a second message indicative of a brake request for braking the vehicle 1, for use in handling the one or more brake operations, and
- handling 303 the one or more brake operations of the braking arrangement in response to the indicated brake request.

Example 19. A computer program product comprising program code for performing, when executed by the processing circuitry 702, the method of any of Examples 14-16 and/or 17-18.

Example 20. A non-transitory computer-readable storage medium comprising instructions, which when executed by the processing circuitry 702, cause the processing circuitry 702 to perform the method of any of Examples 14-16 and/or 17-18.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to handle one or more failures associated with a braking arrangement of a vehicle (1), the processing circuitry (702) is configured to:
- determine one or more failures of the braking arrangement, the one or more failures being associated with any one or more out of: a brake Electronic Control Unit, ECU, (20) of the braking arrangement, one or more brake actuators (40) of the braking arrangement, and a brake pedal and/or brake pedal sensor of the braking arrangement; and
- handle the one or more failures by any one or more out of:
o when the one or more failures are associated with the brake ECU (20), to send a first message to an assisting ECU (50), which first message is indicative of a transfer of control of at least part of the braking arrangement, from the brake ECU (20), to the assisting ECU (50), and wherein the first message triggers the assisting ECU (50) to handle one or more brake operations of the braking arrangement,
∘ when the one or more failures are associated with the one or more brake actuators (40), trigger an increase in respective brake pressure to be provided by one or more operational brake actuators (40) of the braking arrangement,
∘ when the one or more failures are associated with the brake pedal (60) and/or brake pedal sensor (61), obtain motion information of a neighboring vehicle (2) and control the braking arrangement based on said motion information.

2. The computer system (700) of claim 1, wherein the processing circuitry (702) is further configured to obtain one or more status messages indicative of a status of the braking arrangement, and wherein the processing circuitry (702) is configured to determine the one or more failures based on the one or more status messages.

3. The computer system (700) of any of claims 1-2, when the one or more failures are associated with the brake ECU (20), the processing circuitry (702) is further configured to obtain a brake request for braking the vehicle (1), and to send a second message indicative of said brake request to the assisting ECU (50), for use in handling the one or more brake operations.

4. The computer system (700) of any of claims 1-3, when the one or more failures are associated with the brake ECU (20), the processing circuitry (702) is further configured to obtain sensor data associated with a motion of the vehicle (1) and/or of a status of the braking arrangement, and send said sensor data to the assisting ECU (50) for use in handling the one or more brake operations.

5. The computer system (700) of any of claims 1-4, wherein the control transferred to the assisting ECU (50) comprises control of the one or more brake actuators (40) and optionally, wherein the assisting ECU (50) is located remote from the vehicle (1).

6. The computer system (700) of claim 5, wherein the assisting ECU (50) is a virtual ECU comprised in one or more remote servers and/or as part of a cloud network service, or optionally wherein the assisting ECU (50) is an ECU of a neighbouring vehicle (2).

7. The computer system (700) of any of claims 1-6, wherein the processing circuitry (702) is further configured to trigger the increase in respective brake pressure to be provided by one or more operational brake actuators (40) of the braking arrangement by redistributing respective brake pressure of the one or more brake actuators (40) associated with the one or more failures to the one or more operational brake actuators (40).

8. A vehicle (1) comprising a braking arrangement, and comprising the computer system (700) of any of claims 1-7.

9. An assisting brake Electronic Control Unit, ECU, (50) configured to handle one or more failures associated with a brake ECU (20) of a braking arrangement of a vehicle (1), the assisting brake ECU (20) being configured to:
- receive a first message, which first message is indicative of a transfer of control of at least part of the braking arrangement, from the brake ECU (20), to the assisting ECU (50),
- in response to receiving the first message, handle one or more brake operations of the braking arrangement.

10. The assisting brake ECU (20) of claim 9, wherein the assisting brake ECU (20) is further configured to receive a second message indicative of a brake request for braking the vehicle (1), for use in handling the one or more brake operations, and wherein the assisting brake ECU (20) is configured to handle the one or more brake operations of the braking arrangement in response to the indicated brake request, or optionally wherein the assisting brake ECU (20) is further configured to receive sensor data of the brake ECU (20), which sensor data is associated with a motion of the vehicle (1) and/or of a status of the braking arrangement, and wherein the assisting brake ECU (20) is configured to handle the one or more brake operations of the braking arrangement based on the received sensor data.

11. A computer-implemented method for handling one or more failures associated with a braking arrangement of a vehicle (1), the method comprising:
- by a processing circuitry (702) of a computer system (700), determining (202, 501) one or more failures of the braking arrangement, the one or more failures being associated with any one or more out of: a brake Electronic Control Unit, ECU, (20) of the braking arrangement, one or more brake actuators (40) of the braking arrangement, and a brake pedal (60) and/or brake pedal sensor (61) of the braking arrangement; and
- by the processing circuitry (702), handling (203, 502) the one or more failures by any one or more out of:
∘ when the one or more failures are associated with the brake ECU (20), by the processing circuitry (702), sending (204a-1) a first message to an assisting ECU (50), which first message is indicative of a transfer of control of at least part of the braking arrangement, from the brake ECU (20), to the assisting ECU (50), and wherein the first message triggers the assisting ECU (50) to handle one or more brake operations of the braking arrangement,
∘ when the one or more failures are associated with the one or more brake actuators (40), by the processing circuitry (702), triggering (204b-1) an increase in respective brake pressure to be provided by one or more operational brake actuators (40) of the braking arrangement,
∘ when the one or more failures are associated with the brake pedal (60) and/or brake pedal sensor (61), by the processing circuitry (702), obtaining (204c-1) motion information of a neighboring vehicle (2) and controlling (204c-2) the braking arrangement based on said motion information.

12. The method of claim 11, further comprising:
- by the processing circuitry (702), obtaining (201) one or more status messages indicative of a status of the braking arrangement, and wherein determining (202) the one or more failures is based on the one or more status messages.

13. A computer-implemented method performed by an assisting Electronic Control Unit, ECU, (50) for handling one or more failures associated with a brake ECU (20) of a braking arrangement of a vehicle (1), the method comprising:
- receiving (301) a first message, which first message is indicative of a transfer of control of at least part of the braking arrangement, from the brake ECU (20), to the assisting ECU (50),
- in response to receiving the first message, handling (303) one or more brake operations of the braking arrangement.

14. A computer program product comprising program code for performing, when executed by the processing circuitry (702), the method of any of claims 11-12 and/or 13.

15. A non-transitory computer-readable storage medium comprising instructions, which when executed by the processing circuitry (702), cause the processing circuitry (702) to perform the method of any of claims 11-12 and/or 13.
